# EUROPÄISCHE PATENTANMELDUNG

(11) **EP 1 349 405 A1**
(43) Veröffentlichungstag der Anmeldung: **01.10.2003**
(21) Anmeldenummer: 02007195.7
(22) Anmeldetag: 28.03.2002
(51) Int. Cl.: H04Q 7/32

(54) **Verfahren zum Laden eines Softwareprogramms auf ein mobiles Kommunikationsendgerät**

(71) Anmelder: SIEMENS AKTIENGESELLSCHAFT, 80333 München (DE)
(72) Erfinder: Hitz, Hans-Joachim, 82064 Strasslach-Dingharting (DE); Künstner, Joerg, 81379 München (DE); Riedinger, Markus, 85764 Oberschleissheim (DE); Sillge, Leif, 47167 Duisburg (DE)

(57) **Zusammenfassung**

Die Erfindung betrifft ein Verfahren zum Laden eines Datenstroms eines Softwareprogramms von einer Programmquelle auf ein mobiles Kommunikationsendgerät, mit den Schritten:
a) Aufteilen des Datenstroms des Softwareprogramms in mehrere, aufeinander folgende Datenblöcke,
b) Generieren jeweils eines Datenblock-Kennwerts für mindestens zwei der Datenblöcke mittels einer ersten mathematischen Einweg-Funktion,
c) Generieren eines Gesamt-Kennwerts für den Datenstrom aus den mindestens zwei Datenblock-Kennwerten mittels einer zweiten mathematischen Einweg-Funktion,
d) Generieren einer digitalen Signatur mittels eines geheimen Schlüssels der Programmquelle aus dem Gesamt-Kennwert,
e) Übermitteln der Signatur und der mindestens zwei Datenblock-Kennwerte an das mobile Kommunikationsendgerät,
f) Verifizieren der Signatur durch das mobile Kommunikationsendgerät mittels eines im Kommunikationsendgerät hinterlegten, dem geheimen Schlüssel der Programmquelle zugeordneten öffentlichen Schlüssels,
g) Laden des Softwareprogramms auf das mobile Kommunikationsendgerät, wenn das Verifizieren in Schritt f) zu einem positiven Ergebnis geführt hat.

## Beschreibung

Die Erfindung bezieht sich auf ein Verfahren zum Laden eines Datenstroms eines Softwareprogramms von einer Programmquelle auf ein mobiles Kommunikationsendgerät.

Bei Verfahren der genannten Art ist es erforderlich, die Integrität des Softwareprogramms für ein Mikrocontrollersystem eines Kommunikationsendgerätes sicherzustellen. Die technische Integrität, d. h. die Verifizierung, ob das Softwareprogramm zutreffend auf das Kommunikationsendgerät übertragen worden ist, kann in vergleichsweise einfacher Art mittels Prüfsummen festgestellt werden. Solche Prüfsummen reichen jedoch nicht aus, um sicherheitsrelevanten Aspekten des Ladens des Softwareprogramms auf das mobile Kommunikationsendgerät zu genügen. Bereits auf dem Kommunikationsendgerät vorhandene Softwareprogramme können manipuliert werden, um beispielsweise interne SIM-Lock-Codierungen zu ändern oder auf dem mobilen Kommunikationsendgerät befindliche Daten auszuspähen.

Weiterhin kann das einwandfreie Funktionieren des Softwareprogramms für das Kommunikationsendgerät nur dann gewährleistet werden, wenn es sich dabei um ein seitens des Herstellers geprüftes und zugelassenes Softwareprogramm handelt.

Bisher wurde die Integrität eines Softwareprogramms in sicherheitstechnischer Hinsicht versucht dadurch sicherzustellen, dass das Laden des Softwareprogramms, insbesondere auch das Laden einer aktualisierten Version eines bereits auf dem mobilen Kommunikationsendgerät befindlichen Softwareprogramms, hinsichtlich seiner Durchführung auf vertrauliche Stellen, wie Vertriebsstellen, Servicestellen und ähnliches für mobile Kommunikationsendgeräte, beschränkt wurde.

Ein Laden eines Softwareprogramms auf ein mobiles Kommunikationsendgerät durch den Benutzer selbst ist bisher nicht vorgesehen. Jedoch hat es sich als erforderlich erwiesen, die Überprüfbarkeit der Herkunftsintegrität des Softwareprogramms zu verbessern, da nicht zwingend davon ausgegangen werden kann, dass auch Personen, die über das nötige Know-how bzw. erforderliche Tools verfügen, Softwareprogramme manipulieren, Herkunftscodierungen ändern oder ähnliches vornehmen.

Ausgehend hiervon liegt der Erfindung die Aufgabe zugrunde, ein Verfahren zum Laden eines Datenstroms eines Softwareprogramms von einer Programmquelle auf ein mobiles Kommunikationsendgerät zu schaffen, bei dem der Aspekt Herkunftsintegrität verbessert berücksichtigt ist.

Diese Aufgabe wird gelöst durch ein Verfahren zum Laden eines Datenstroms eines Softwareprogramms von einer Programmquelle auf ein mobiles Kommunikationsendgerät, mit den Schritten:
a) Aufteilen des Datenstroms des Softwareprogramms in mehrere, aufeinander folgende Datenblöcke,
b) Generieren jeweils eines Datenblock-Kennwerts für mindestens zwei der Datenblöcke mittels einer ersten mathematischen Einweg-Funktion,
c) Generieren eines Gesamt-Kennwerts für den Datenstrom aus den mindestens zwei Datenblock-Kennwerten mittels einer zweiten mathematischen Einweg-Funktion,
d) Generieren einer digitalen Signatur mittels eines geheimen Schlüssels der Programmquelle aus dem Gesamt-Kennwert,
e) Übermitteln der Signatur und der mindestens zwei Datenblock-Kennwerte an das mobile Kommunikationsendgerät,
f) Verifizieren der Signatur durch das mobile Kommunikationsendgerät mittels eines im Kommunikationsendgerät hinterlegten, dem geheimen Schlüssel der Programmquelle zugeordneten öffentlichen Schlüssels,
g) Laden des Softwareprogramms auf das mobile Kommunikationsendgerät, wenn das Verifizieren in Schritt f) zu einem positiven Ergebnis geführt hat.

Ein wesentlicher Gesichtspunkt des Verfahrens ist es, dass in den Datenstrom des Softwareprogramms, bei dem es sich insbesondere auch um eine aktualisierte Version eines bereits auf dem mobilen Kommunikationsendgerät befindlichen Softwareprogramms handeln kann, eine digitale Signatur einzuprägen, die auf Seiten des mobilen Kommunikationsendgeräts überprüft werden kann.

Der generierte Gesamt-Kennwert beruht im einfachsten Fall auf zwei Datenblock-Kennwerten, die entweder nur einen Teil des Datenstroms oder den gesamten Datenstrom wiedergeben können. Es ist vorteilhaft, wenn in den generierten Gesamt-Kennwert sowohl die Datenblock-Kennwerte als auch deren Lage im Datenstrom eingehen.

Das Verifizieren der Signatur durch das mobile Kommunikationsendgerät kann dadurch vollzogen werden, dass der mittels des öffentlichen Schlüssels wiedergewonnene Gesamt-Kennwert verglichen wird mit einem Kennwert für die mindestens zwei Datenblöcke, der ebenfalls mittels der zweiten mathematischen Einweg-Funktion gewonnen wird. Auf diese Weise ist die Herkunft der mindestens zwei Datenblöcke und ihre Unverfälschtheit verifiziert. Als Vorteil ist herauszustellen, dass die Signatur-Verifizierung unabhängig von dem gewählten Verfahren von der eigentlichen Übermittlung des Datenstroms durchgeführt werden kann.

Wenn die zwei Datenblöcke nur einen Teil des gesamten Datenstroms des Softwareprogramms bilden, ist die Verifizierung insofern eingeschränkt. Dies bedeutet, dass für die verbleibenden Datenblöcke des Datenstroms ihre Unverfälschtheit nicht gewährleistet ist. Inwieweit die Datenblöcke, für die Datenblock-Kennwerte generiert werden, den gesamten Datenstrom umfassen, richtet sich nach dem Grad der gewünschten Sicherheit bei der Verifizierung des Datenstroms. Die Entscheidung, ob ein bestimmter Datenstromabschnitt sicherheitsrelevant ist oder nicht, wird bevorzugt von einer Software im mobilen Kommunikationsendgerät entschieden.

Das Softwareprogramm wird nur dann auf das mobile Kommunikationsendgerät bzw. sein Mikrocontrollersystem geladen, wenn das Verifizieren der Signatur zu einem positiven Ergebnis geführt hat, so dass der Datenstrom, der bevorzugt nach einem Übermitteln der digitalen Signatur auf das mobile Kommunikationsendgerät übertragen wird, bei negativem Ergebnis der Verifizierung in Schritt f) auf der Programmquelle verbleibt.

Das Verfahren hat gegenüber dem Stand der Technik den Vorteil einer erhöhten Sicherheit, weil ein modifiziertes Softwareprogramm oder ein zum Ausspähen von Daten hergerichtetes Softwareprogramm mangels zutreffender digitaler Signatur nicht auf das mobile Kommunikationsendgerät geladen werden können.

Es wird als bevorzugt angesehen, das in Schritt g) zusätzlich Datenblock-Kennwerte für die mindestens zwei Datenblöcke mittels der ersten mathematischen Einweg-Funktion durch das mobile Kommunikationsendgerät berechnet werden, die so gewonnenen zwei Datenblock-Kennwerte auf Übereinstimmung mit den in Schritt e) übermittelten Datenblock-Kennwerten geprüft werden und das Laden der Software abgebrochen werden kann, wenn die Prüfung für mindestens einen der Datenblöcke negativ ist. Genauer gesagt, werden bereits auf das mobile Kommunikationsendgerät geladene Daten bei negativem Ergebnis verworfen, wobei entweder nur der betreffende Datenblock verworfen wird oder insgesamt das Laden der Software abgebrochen wird.

Auf diese Weise können sukzessive bei der Übermittlung des Datenstroms, nach erfolgreicher Verifizierung der Signatur, die einzelnen Datenblöcke auf ihre Unverfälschtheit überprüft werden, wobei die Verifizierung der einzelnen Datenblock-Kennwerte aufgrund der digitalen Signatur sichergestellt ist.

Die Prüfung eines der Datenblock-Kennwerte kann unmittelbar nach Empfang des zugehörigen Datenblocks vorgenommen werden, wobei im Falle einer Prüfung mit negativem Ergebnis der Ladevorgang beendet und ggf. bereits geladene Datenstromteile früherer Datenblöcke im mobilen Kommunikationsendgerät wieder entfernt werden.

Das Verfahren in jedem seiner Ausführungsformen, die oben erläutert sind, kann unabhängig von dem mobilen Kommunikationsendgerät selbst durchgeführt werden, wobei sowohl eine Gesamt-Software des mobilen Kommunikationsendgerätes als auch einzelner Softwarebereiche modifiziert oder ausgetauscht werden können.

Auch eine Mehrfachsignatur des Datenstroms des Softwareprogramms ist mit dem Verfahren in einer bevorzugten Ausführungsform möglich, nämlich wenn beispielsweise in Schritt d) mittels weiterer geheimer Schlüssel der Programmquelle mehrere digitale Signaturen aufgrund des in Schritt c) generierten Gesamt-Kennwerts generiert werden und die den geheimen Schlüsseln zugehörigen öffentlichen Schlüssel im mobilen Kommunikationsendgerät hinterlegt werden.

In dem mobilen Kommunikationsendgerät kann auch nur eine Teilmenge der den geheimen Schlüsseln zugehörigen öffentlichen Schlüssel hinterlegt werden. Eine Anwendung dessen besteht darin, dass ein Paar aus einem geheimen Schlüssel und einem öffentlichen Schlüssel einer Version des Softwareprogramms, insbesondere einer Aktualisierungsversion, zugeordnet ist. Auf diese Weise kann seitens des Betreibers der Programmquelle über die Vergabe des öffentlichen Schlüssels festgelegt werden, welche mobilen Kommunikationsendgeräte mit welcher Version des Softwareprogramms versehen werden sollen.

Für die erste und die zweite mathematische Einweg-Funktion kann bevorzugt eine im Stand der Technik gut bekannte Hash-Funktion verwendet werden, welche die Eigenschaft hat, dass der gewonnene Funktionswert nicht gezielt anhand von veränderten Eingangsgrößen (Variablen) konstruiert werden kann. Es können zwar auch keine Rückschlüsse auf die Eingabewerte erzielt werden, welche jedoch in Klartext vorliegen.

Der Einfachheit halber können die erste und die zweite mathematische Einweg-Funktion identisch sein.

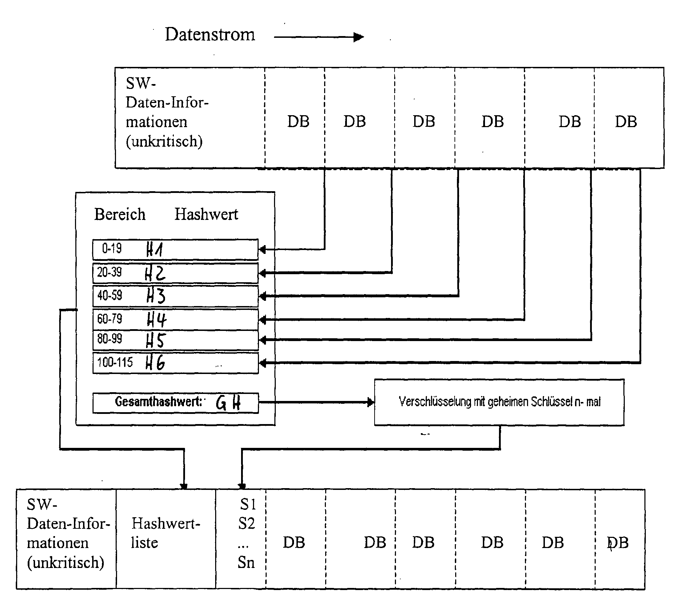

Ein Ausführungsbeispiel der Erfindung wird nachfolgend anhand der Zeichnung näher erläutert. Die einzige Figur veranschaulicht schematisch den Ablauf eines Verfahrens zum Laden eines Softwareprogramms auf ein mobiles Kommunikationsendgerät.

Zu Beginn der Beschreibung des Verfahrens nach der Erfindung steht die Betrachtung der Struktur des von einer Programmquelle auf ein mobiles Kommunikationsendgerät zu ladenden Softwareprogramms. Der Datenstrom ist in einzelne, aneinander anschließende Datenblöcke aufgeteilt, deren Größe frei wählbar ist. Der Datenstrom ist um Software-Daten-Informationen erweitert, die sicherheitstechnisch unkritisch einzuschätzen sind. Auf Seiten des Herstellers des Softwareprogramms werden für die einzelnen Datenblöcke DB jeweils mittels einer mathematischen Einweg-Funktion, nämlich einer Hash-Funktion, Hash-Werte der jeweiligen Datenblöcke berechnet.

So ist in dem dargestellten Ausführungsbeispiel den Softwareprogramm-Datenelementen 0-19 ein erster Hash-Wert H1, den Softwareprogramm-Daten-Elementen 20-39 ein zweiter Hash-Wert H2 usw. zugeordnet, wobei der sechste Datenblock hinsichtlich der Anzahl seiner Softwareprogramm-Datenelemente gegenüber dem vorhergehenden Datenblöcken vermindert ist.

Mittels derselben Hash-Funktion, die zum Berechnen der Hash-Werte H1, H2, ... verwendet wurde, wird als Gesamt-Kennwert ein Gesamt-Hash-Wert GH für die gewonnenen Hash-Werte H1, H2, usw. berechnet. Der Gesamt-Hash-Wert GH wird auf Seiten der Programmquelle mittels geheimer Schlüssel mehrfach verschlüsselt, wobei in dem Ausführungsbeispiel n geheime Schlüssel der Programmquelle eingesetzt werden. Auf diese Weise werden aufgrund des Gesamt-Hash-Wertes GH n digitale Signaturen S₁, S₂, ..., und Sₙ generiert.

Die den geheimen Schlüsseln zugeordneten öffentlichen Schlüssel sind vollständig oder teilweise vorab in den mobilen Kommunikationsendgerät hinterlegt worden.

Das eigentliche Laden der Software auf ein Mikrocontrollersystem des mobilen Kommunikationsendgerätes vollzieht sich nun wie folgt: Zu Beginn werden unkritische Software-Daten-Informationen übertragen, an die sich eine Liste der Hash-Werte H1, H2, ... anschließt. Anschließend werden eine oder mehrere der digitalen Signaturen, die jeweils dem Gesamt-Hash-Wert GH und einem der n geheimen Schlüssel zugeordnet sind, zu dem mobilen Kommunikationsendgerät übertragen. Werden mehrere digitale Signaturen übertragen, liegt eine Mehrfachsignierung der Liste der Hash-Werte H1, H2, ... vor.

Bei dem Versuch, ist es möglich, sowohl über eine externe Software die zu verwendenden Signaturen zu selektieren oder aber sämtliche Signaturen an das Kommunikationsendgerät zu übermitteln, welches dann die geeignete Signatur auswählt. Allgemein liegt eine Mehrfachsignierung vor, wenn mehr als eine Signatur in einer Quelldatei vorliegt.

Sofern nur eine digitale Signatur aus den n digitalen Signaturen ausgewählt wird, liegt eine einfache digitale Signatur vor. Dabei kann diese digitale Signatur einer bestimmten Version des Softwareprogramms zugeordnet sein, so dass über die digitale Signatur eine Version des Softwareprogramms ausgewählt wird. In diesem Fall wird das Softwareprogramm nur dann auf das mobile Kommunikationsendgerät geladen, wenn der der digitalen Signatur zugrundeliegende geheime Schlüssel zu einem Schlüsselpaar gehört, dessen öffentlicher Schlüssel im mobilen Kommunikationsendgerät hinterlegt ist. Auf diese Weise kann der Hersteller des Softwareprogramms einen bestimmten Anteil mobiler Kommunikationsendgeräte, die nicht über den erforderlichen öffentlichen Schlüssel verfügen, beispielsweise von bestimmten Softwareprogrammaktualisierungen ausschließen.

Nach der Übertragung der mindestens einen digitalen Signatur S₁ wird durch Software im mobilen Kommunikationsendgerät eine Verifizierung der digitalen Signatur S₁ vorgenommen, bevor die Datenblöcke DB von der Programmquelle auf das mobile Kommunikationsendgerät übertragen werden. Sofern der öffentliche Schlüssel beispielsweise während des Herstellungsprozesses des mobilen Kommunikationsendgerätes, der zu dem geheimen Schlüssel der digitalen Signatur passt, vorliegt, wird der verschlüsselte Gesamt-Hash-Wert GH mittels des öffentlichen Schlüssels entschlüsselt. Anschließend wird überprüft, ob der entschlüsselte Gesamt-Hash-Wert GH einem Kennwert entspricht, der durch Anwendung der Hash-Funktion auf die Liste von Hash-Werten H1, H2, ..., hervorgebracht wird. Auf diese Weise erfolgt die Verifizierung der Liste der Hash-Werte H1, H2, ..., so dass ihre Unverfälschtheit und ihre Herkunft von der vertrauenswürdigen Programmquelle sichergestellt sind.

Sofern die Verifizierung des mindestens einen digitalen Schlüssels S1 zu einem positiven Ergebnis geführt hat, wird begonnen, den Datenstrom auf das mobile Kommunikationsendgerät zu laden. Im negativen Fall wird der Ladevorgang abgebrochen.

Bei positiv verifizierter digitaler Signatur werden die einzelnen Datenblöcke DB nacheinander auf das mobile Kommunikationsendgerät geladen, wobei nach Empfang jedes einzelnen Datenblocks DB der Hash-Wert der diesem Datenblock zugeordneten Datenelemente mittels der Hash-Funktion ermittelt und mit dem zugeordneten Hash-Wert - für den ersten Datenblock ist dies H1 - verglichen wird. Fällt dieser Vergleich negativ aus, wird der Ladevorgang des Datenstroms des Softwareprogramms unmittelbar unterbrochen und bereits geladene Datenblöcke können aus dem Mikrocontrollersystem des mobilen Kommunikationsendgerätes wieder entfernt werden.

Sofern eine einfache digitale Signatur des Softwareprogramms gewählt wird, ergibt sich der Vorteil, dass das Signieren mit einem Schlüsselpaar aus geheimem Schlüssel und öffentlichem Schlüssel und die Verifikation der digitalen Signatur für die Liste der Hash-Werte H1, H2, ..., nur einmal pro Ladevorgang durchgeführt werden muss. Damit wird die gesamte Laufzeit des Ladevorgangs gering gehalten, was gerade im Hinblick auf die geringe Rechenkraft eines Mikrocontrollersystems eines mobilen Kommunikationsendgerätes vorteilhaft ist.

Hervorzuheben ist auch, dass die Verifikation der digitalen Signatur vor dem Ausführen der Hash-Funktion der einzelnen Datenblöcke aufgeführt werden kann, so dass im mobilen Kommunikationsendgerät Speicherressourcen eingespart werden können, da diese nach der Verifikation der digitalen Signatur wieder vollständig zur Verfügung stehen können.

Es ist insbesondere auch möglich, dass ein bestimmter Bereich eines Speichers des mobilen Kommunikationsendgerätes nacheinander die einzelnen, übertragenen Datenblöcke DB erhält, so dass beispielsweise eine aktualisierte Version des Softwareprogramms Schritt für Schritt installiert werden kann, und zwar unter möglichst geringer Belegung des zur Verfügung stehenden Speichers des mobilen Kommunikationsendgerätes.

## Patentansprüche

1. Verfahren zum Laden eines Datenstroms eines Softwareprogramms von einer Programmquelle auf ein mobiles Kommunikationsendgerät, mit den Schritten:
a) Aufteilen des Datenstroms des Softwareprogramms in mehrere, aufeinander folgende Datenblöcke,
b) Generieren jeweils eines Datenblock-Kennwerts für mindestens zwei der Datenblöcke mittels einer ersten mathematischen Einweg-Funktion,
c) Generieren eines Gesamt-Kennwerts für den Datenstrom aus den mindestens zwei Datenblock-Kennwerten mittels einer zweiten mathematischen Einweg-Funktion,
d) Generieren einer digitalen Signatur mittels eines geheimen Schlüssels der Programmquelle aus dem Gesamt-Kennwert,
e) Übermitteln der Signatur und der mindestens zwei Datenblock-Kennwerte an das mobile Kommunikationsendgerät,
f) Verifizieren der Signatur durch das mobile Kommunikationsendgerät mittels eines im Kommunikationsendgerät hinterlegten, dem geheimen Schlüssel der Programmquelle zugeordneten öffentlichen Schlüssels,
g) Laden des Softwareprogramms auf das mobile Kommunikationsendgerät, wenn das Verifizieren in Schritt f) zu einem positiven Ergebnis geführt hat.

2. Verfahren nach Anspruch 1, bei dem in Schritt g) zusätzlich Datenblock-Kennwerte für die mindestens zwei Datenblöcke mittels der ersten mathematischen Einweg-Funktion durch das mobile Kommunikationsendgerät berechnet werden, die so gewonnenen zwei Datenblock-Kennwerte auf Übereinstimmung mit den in Schritt e) übermittelten Datenblock-Kennwerten geprüft werden und das Laden der Software abgebrochen wird, wenn die Prüfung für mindestens einen der Datenblöcke negativ ist.

3. Verfahren nach Anspruch 2,
bei dem in Schritt g) die Prüfung eines der Datenblock-Kennwerte unmittelbar nach Empfang des zugehörigen Datenblocks vorgenommen wird.

4. Verfahren nach einem der Ansprüche 1 bis 3,
bei dem in Schritt d) mittels weiterer geheimer Schlüssel der Programmquelle mehrere digitale Signaturen aufgrund des in Schritt c) generierten Gesamt-Kennwerts generiert werden und die den geheimen Schlüsseln zugehörigen öffentlichen Schlüssel im mobilen Kommunikationsendgerät hinterlegt werden.

5. Verfahren nach einem der Ansprüche 1 bis 3,
bei dem in Schritt d) mittels weiterer geheimer Schlüssel der Programmquelle mehrere digitale Signaturen aufgrund des in Schritt c) generierten Gesamt-Kennwerts generiert werden und eine Teilmenge der den geheimen Schlüsseln zugehörigen öffentlichen Schlüssel im mobilen Kommunikationsendgerät hinterlegt wird.

6. Verfahren nach Anspruch 5,
bei dem ein Paar aus einem geheimen und einem öffentlichen Schlüssel einer Version des Softwareprogramms zugeordnet ist.

7. Verfahren nach einem der Ansprüche 1 bis 6,
bei dem für die erste und die zweite mathematische Einweg-Funktion jeweils eine Hash-Funktion verwendet wird.

8. Verfahren nach einem der Ansprüche 1 bis 7,
bei dem die erste und die zweite mathematische Einweg-Funktion identisch sind.
